# EUROPEAN PATENT APPLICATION

(11) **EP 4 834 659 A1**
(43) Date of publication of application: **04.11.2026**
(21) Application number: 26172252.4
(22) Date of filing: 14.04.2026
(51) Int. Cl.: B60N 3/00, B64D 11/06

(54) **TABLE ASSEMBLY, VEHICLE, AND METHOD FOR PROVIDING A DESKTOP**

(30) Priority: 14.04.2025 CN 202510469038
(71) Applicant: Faurecia Automotive Interior System (Shanghai) Co., Ltd., Shanghai 201109 (CN)
(72) Inventor: TANG, Junjie, Shanghai (CN); CHENG, Shiqi, Shanghai (CN); SUN, Xupeng, Shanghai (CN); FLOC'H, Jeremy, Méru (FR); MARTIN, Gregory, Méru (FR); LE MESNIL, Thibault, Méru (FR)
(74) Representative: Pfenning, Meinig & Partner mbB

(57) **Abstract**

The present disclosure relates to a table assembly, a vehicle, and a method for providing a desktop. The table assembly includes: a support rocker arm, one end of the support rocker arm in a length direction providing a rotation point of the support rocker arm, the support rocker arm being rotatable about the rotation point; the other end of the support rocker arm in the length direction providing a support rotating part, the support rotating part including a rotating part, a first supporting part and a second supporting part, the first supporting part and the second supporting part being respectively located at two sides of the rotating part; and a table plate assembly including: a table support member rotatably connected to the rotating part, the table support member being rotatable in a first direction until the table support member abuts against the first supporting part, or the table support member being rotatable in a second direction until the table support member abuts against the second supporting part, the first direction being opposite to the second direction.

## Description

### FIELD

The present disclosure relates to a table assembly, a vehicle, and a method for providing a desktop.

### BACKGROUND

In a vehicle, such as a cabin of an automobile, a foldable table plate is able to be provided. When the table plate is needed, the table plate is taken out from an accommodation space and unfolded to provide a desktop for a user, for example, for placing objects such as a mobile phone and a tablet, or placing food. When the table plate is not used in a folded state, it is placed in the accommodation space.

With continuous increase of user experience requirements, users in the vehicle may have a demand to use the foldable table plate to use as a desktop. The inventor has found that if a corresponding table plate is specially provided for each user, a large space will be occupied.

Therefore, there is a need in the art for a table assembly, a vehicle, and a method for providing a desktop, which can minimize the occupied space on the basis of satisfying the use of the desktop by multiple users.

### SUMMARY

An object of the present disclosure is to provide a table assembly.

An object of the present disclosure is to provide a vehicle.

An object of the present disclosure is to provide a method for providing a desktop.

According to a first aspect of the present disclosure, a table assembly includes: a support rocker arm, one end of the support rocker arm in a length direction providing a rotation point of the support rocker arm, the support rocker arm being rotatable about the rotation point; the other end of the support rocker arm in the length direction providing a support rotating part, the support rotating part including a rotating part, a first supporting part and a second supporting part, the first supporting part and the second supporting part being respectively located at two sides of the rotating part; and a table plate assembly including: a table support member rotatably connected to the rotating part, the table support member being rotatable in a first direction until the table support member abuts against the first supporting part, or the table support member being rotatable in a second direction until the table support member abuts against the second supporting part, the first direction being opposite to the second direction; and a table member providing a desktop, the table support member being located at a side opposite to the desktop to support the table member.

Beneficial effects of the above technical solution include, but are not limited to: by providing the rotatably unfoldable support rocker arm and the support rotating part at one end, and providing the rotating part and the supporting parts at two sides, rotation blockers in opposite first and second directions are provided, so that a single table member is able to be used by users in multiple directions. When a user on one side needs the desktop, the table member is rotated in the first direction; when a user on the other side needs the desktop, the table member is rotated in the second direction. Thus, there is no need to provide corresponding table assemblies in two directions respectively (which requires two table assemblies), and this can be realized by only a single table assembly, thereby minimizing the occupied space on the basis of satisfying the use of the desktop by multiple users.

In one or more embodiments of the table assembly, a first edge of the rotating part is substantially perpendicular to a second edge of the first supporting part, the second edge providing a first shoulder; a third edge of the rotating part is substantially perpendicular to a fourth edge of the second supporting part, the fourth edge providing a second shoulder.

In one or more embodiments of the table assembly, the table member includes a first table plate and a second table plate, the first table plate and the second table plate being connected by a hinge assembly; the hinge assembly includes a first hinge and a second hinge arranged coaxially; the hinge assembly is located at one end of the table support member in a length direction and between the first table plate and the second table plate; the first table plate is rotatable about the first hinge, and the second table plate is rotatable about the second hinge.

In one or more embodiments of the table assembly, the table support member further includes at least one latch member, the latch member including a plug-in portion and an operating portion; the first hinge and/or the second hinge is provided with a plug-in opening, the plug-in opening matching the plug-in portion; when the operating portion is subjected to an operating force, the plug-in portion is movable to connect with or disconnect from the plug-in opening, so as to lock or unlock the first hinge and the second hinge.

In one or more embodiments of the table assembly, the plug-in portion and the operating portion are fixedly connected by a pin member.

In one or more embodiments of the table assembly, the table assembly has a first open state and a second open state: in the first open state, one of the first table plate and the second table plate of the table member is located on an upper surface to provide a first desktop, and the other is located below the first desktop, wherein only the first desktop provides the desktop of the table assembly; in the second open state, on the basis that one of the first table plate and the second table plate of the table member is located on the upper surface to provide the first desktop, the other is turned over to a position flush with the first desktop via the corresponding first hinge and second hinge to provide a second desktop, such that the first desktop and the second desktop together provide the desktop.

In one or more embodiments of the table assembly, for the coaxially arranged first hinge and second hinge, the second hinge is located at two axial sides of the first hinge, or the second hinge and the first hinge are respectively arranged at one axial side and the other axial side; the first hinge and/or the second hinge is connected with a damper.

In one or more embodiments of the table assembly, the table support member includes a first part and a second part, the first part supporting the table member, the second part being connected to the support rotating part, and the second part being provided with a cup holder.

According to a second aspect of the present disclosure, a vehicle includes the table assembly according to the first aspect; the vehicle includes a center console armrest or a seat armrest, and each center console armrest and/or seat armrest only accommodates a single table assembly.

According to a third aspect of the present disclosure, a method for providing a desktop adopts the table assembly according to the first aspect, the method including the steps of:
moving the table plate assembly from an inside to an outside of an accommodation space by rotating the support rocker arm about the rotation point;
rotating the table member in the first direction until the table support member abuts against the first supporting part, or rotating the table member in the second direction until the table support member abuts against the second supporting part, so as to provide the desktop.

Description of attached drawings The above and other features, properties, and advantages of the present disclosure will become more apparent through the following description in conjunction with the accompanying drawings and embodiments, where:
FIG. 1 is a schematic structural diagram of a vehicle according to an embodiment.
FIG. 2 and FIG. 3 are schematic structural diagrams of a table assembly according to an embodiment when a table support member is rotated in a first direction to abut against a first supporting part and in a second direction to abut against a second supporting part, respectively.
FIG. 4 is a schematic structural diagram of a table assembly according to an embodiment when folded in an accommodation space.
FIG. 5, FIG. 6 and FIG. 7 are schematic structural diagrams of a table assembly according to an embodiment when rotated and unfolded from an accommodation space in a first direction to provide a desktop.
FIG. 8A, FIG. 8B and FIG. 9 are schematic diagrams of a table assembly according to an embodiment in a first open state and a second open state on a first direction side, respectively.
FIG. 10, FIG. 11 and FIG. 12 are schematic structural diagrams of a table assembly according to an embodiment when rotated and unfolded from an accommodation space in a second direction to provide a desktop.
FIG. 13A, FIG. 13B and FIG. 14 are schematic diagrams of a table assembly according to an embodiment in a first open state and a second open state on a second direction side, respectively.
FIG. 15 is a schematic partial cross-sectional view of a table assembly according to an embodiment.
FIG. 16 and FIG. 17 are schematic structural diagrams of a table assembly according to another embodiment.
FIG. 18 is a schematic flow chart of a method for providing a desktop according to an embodiment.

### Reference Numerals:

1000 - vehicle
1001 - center console armrest
100 - table assembly
101 - first open state
102 - second open state
1 - support rocker arm
11 - rotation point
12 - support rotating part
120 - rotating part
1200 - rotation shaft
1201 - first edge
1202 - third edge
121 - first supporting part
1211 - second edge
122 - second supporting part
1221 - fourth edge
124 - first shoulder
125 - second shoulder
2 - table plate
21 - table support member
211 - first part
212 - second part
22 - table member
221 - first table plate
222 - second table plate
220 - desktop
2201 - first desktop
2202 - second desktop
23 - hinge assembly
231 - first hinge
232 - second hinge
233 - plug-in opening
24 - latch member
241 - plug-in portion
242 - operating portion
243 - pin member
3 - cup holder
200 - accommodation space

### Detailed Description of Embodiments

Hereinafter, embodiments of the technical solution of the present disclosure will be described in detail with reference to the drawings. And embodiments are merely used to more clearly explain the technical solution of the present disclosure, and therefore are merely examples, and should not limit the scope of protection of the present disclosure.

Unless otherwise defined, all technical and scientific terms used herein have the same meaning as commonly understood by those skilled in the art of the present disclosure. The terms used herein are for the purpose of describing embodiments only and not intended to limit the present disclosure; The terms "including" and "having" and any variations thereof in the specification and claims of the present disclosure and the above description of drawings are intended to cover non-exclusive inclusions.

In the embodiments of the present disclosure, the technical terms "first", "second" and the like are only used to distinguish different objects, and should not be understood to indicate or imply relative importance or implicitly indicate the number, specific order, or primary-secondary relationship of the indicated technical features. In the embodiments of the present disclosure, "a plurality" means two or more unless otherwise explicitly and specifically defined.

An "embodiment" means that a particular feature, structure, or characteristic described may be included in at least one embodiment of the present disclosure. The appearance of the word "embodiment" in various places in the specification does not necessarily refer to the same embodiment, nor refer to an independent or alternative embodiment that is mutually exclusive from other embodiments. It may be explicitly and implicitly understood by those skilled in the art that the embodiments described herein may be combined with other embodiments.

In the embodiments of the present disclosure, the technical terms such as "center", " longitudinal", " transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like are based on the orientation or positional relationships shown in the drawings, and are merely used to facilitate and simplify the description of the embodiments of the present disclosure, and do not indicate or imply that the referred device or element must have a specific orientation, be constructed and operated in a specific orientation, and therefore cannot be understood as a limitation of the embodiments of the present disclosure.

In the embodiments of the present disclosure, unless otherwise explicitly specified and defined, technical terms such as "mounted", "linked", "connected" and "fixed" should be understood in a broad sense, for example, they may be fixed connected, detachable connected, or integrated; It may also be a mechanical connection, and those skilled in the art can understand the specific meanings of the above terms in the embodiments of the present disclosure according to specific circumstances.

Flowcharts are used in the present disclosure to illustrate operations performed by a system according to embodiments of the present disclosure. It should be understood that the above or following operations are not necessarily performed in an exact order. Other operations may also be added to these processes, or one or more operations may be removed from these processes.

Although the table assembly disclosed in the embodiments of the present disclosure is suitable for vehicles, it is not limited thereto. For example, it may be suitable for scenarios of other vehicles, such as railway trains, ships, airplanes and the like. The table assembly, the vehicle and the method for providing a desktop disclosed in the embodiments may be applied as long as the occupied space is reduced on the basis of satisfying the use of the desktop by multiple users.

The first direction and the second direction in the following description are exemplified by a counterclockwise direction and a clockwise direction shown in the drawings, but are not limited thereto.

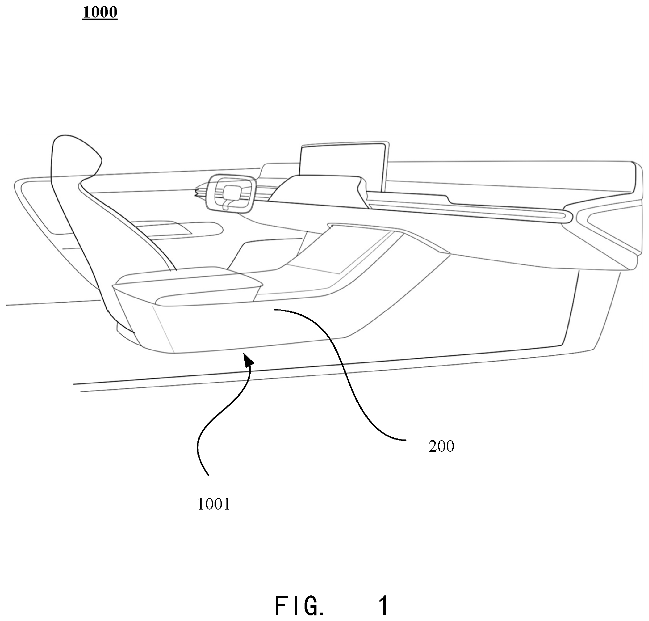

Referring to FIG. 1, a vehicle 1000, for example, an automobile is shown, and a center console armrest 1001 is provided in a cabin of the automobile, the center console armrest 1001 having an accommodation space 200. In the embodiments described below, it will be described in detail that even only one single table assembly 100 being accommodated in the accommodation space 200 of one center console armrest 1001 is able to satisfy the provision of a usable desktop for multiple users, thereby reducing the space occupied by the table assembly. It can be understood that the interior component providing the accommodation space 200 is not limited to the center console armrest 1001, and may also be a seat armrest, for example, a seat armrest at a rear row, set between a plurality of rear seats. A single table assembly 100 is disposed in the accommodation space of the seat armrest, which can also satisfy the need of providing a usable desktop for users on two sides in the accommodation space of a single armrest, thereby reducing the space occupied by the table assembly.

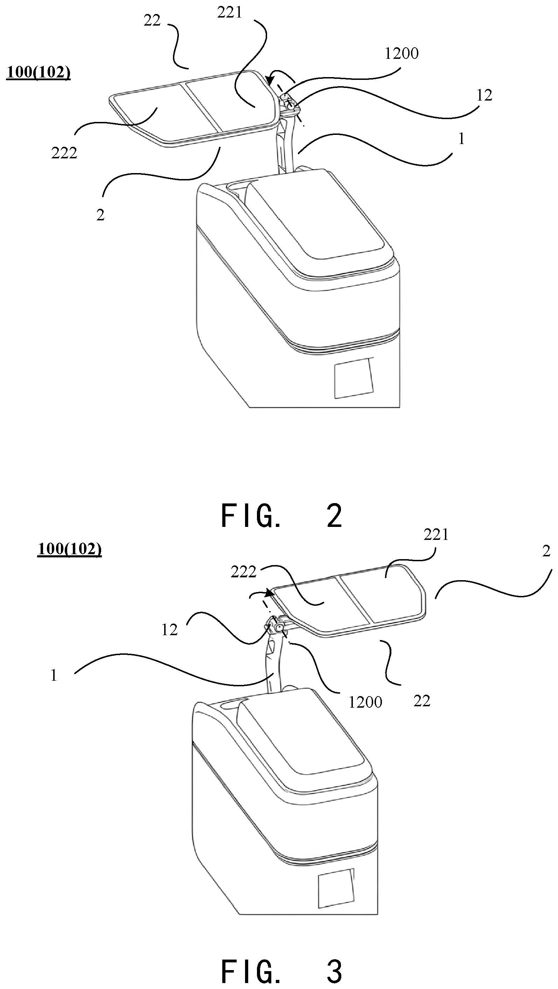

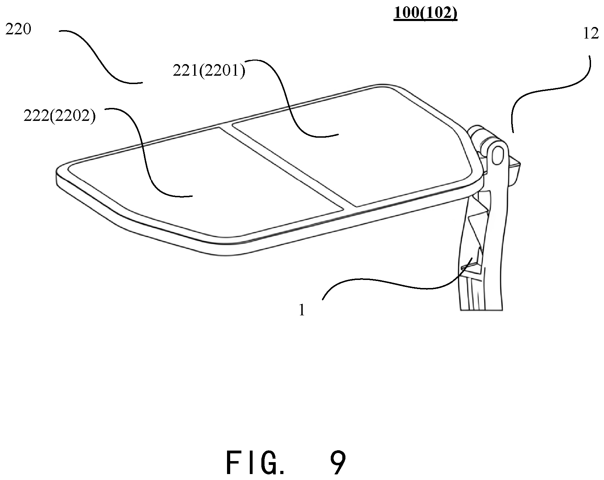

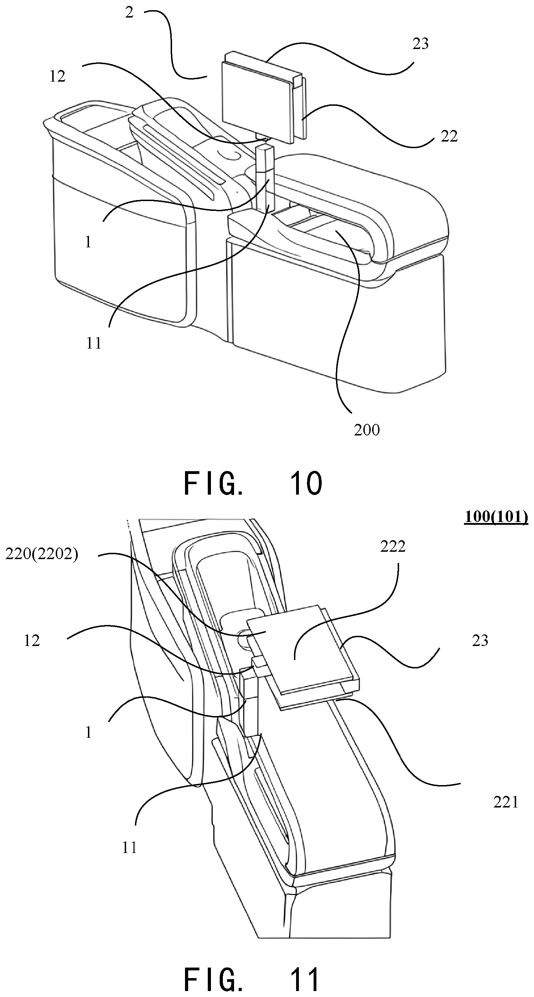

Referring to FIGS. 2 to 15, in some embodiments, the table assembly 100 includes a support rocker arm 1 and a table plate assembly 2.

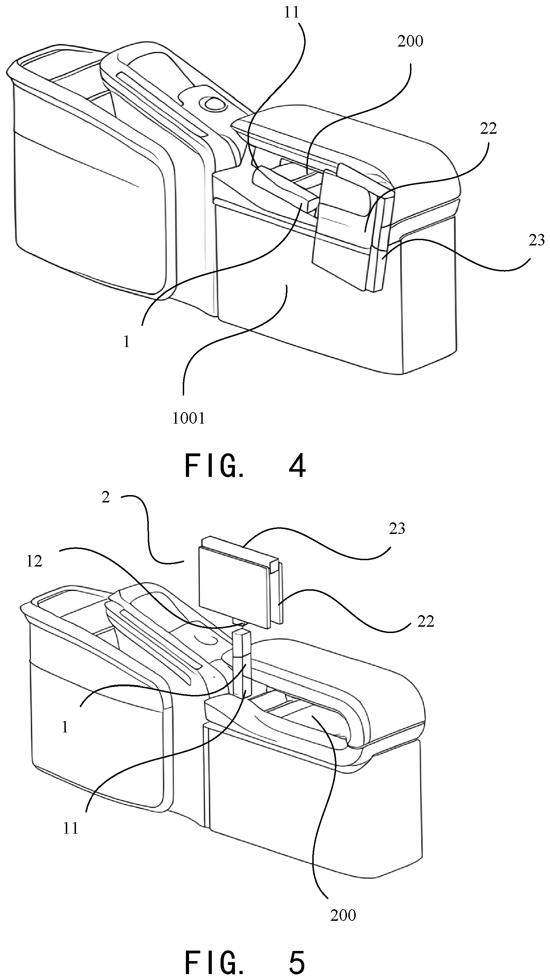

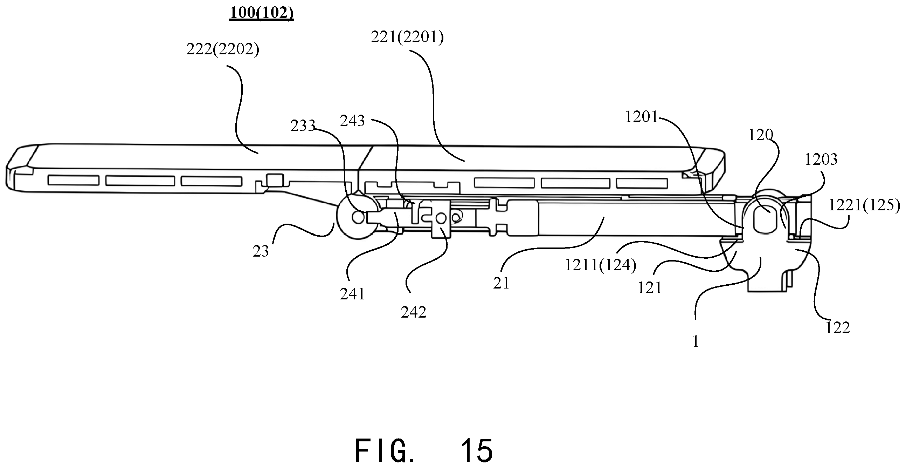

As shown in FIGS. 4, 5 and 11, one end of the support rocker arm 1 in a length direction provides a rotation point 11 of the support rocker arm 1, and the support rocker arm 1 is rotatable about the rotation point 11. The other end of the support rocker arm 1 in the length direction provides a support rotating part 12. As shown in FIG. 15, the support rotating part 12 includes a rotating part 120, a first supporting part 121 and a second supporting part 122, the first supporting part 121 and the second supporting part 122 being respectively located at two sides of the rotating part 120.

The table plate assembly 2 includes a table support member 21 and a table member 22. As shown in FIG. 15, the table support member 21 is rotatably connected to the rotating part 120, and the table support member 21 is rotatable in a first direction until the table support member 21 abuts against the first supporting part 121, wherein the first direction is a counterclockwise direction. It can be understood that the table support member 21 may also be rotatable in a second direction until the table support member 21 abuts against the second supporting part 122; the first direction is opposite to the second direction, that is, the second direction is a clockwise direction. The table member 22 provides a desktop 220, and the table support member 21 is located at a side opposite to the desktop 220 to support the table member 22.

In some embodiments, the rotating part 120 provides a rotation shaft 1200, and the table support member 21 is rotatable about the rotation shaft 1200 in the first direction until the table support member 21 abuts against the first supporting part 121, or the table support member 21 is rotatable about the rotation shaft 1200 in the second direction until the table support member 21 abuts against the second supporting part 122.

The beneficial effects of the above embodiments are that by providing the rotatably unfoldable support rocker arm 1 and the support rotating part 12 at one end, and providing the rotating part 120 and the supporting parts at two sides, rotation blockers in opposite first and second directions are provided, so that a single table member 22 can be used by users in multiple directions. When a user on one side needs the desktop, the table member is rotated in the first direction; when a user on the other side needs the desktop, the table member is rotated in the second direction. Thus, there is no need to provide corresponding table assemblies in two directions respectively (which requires two table assemblies), and this can be realized by only a single table assembly 100, thereby reducing the occupied space on the basis of satisfying the use of the desktop by multiple users.

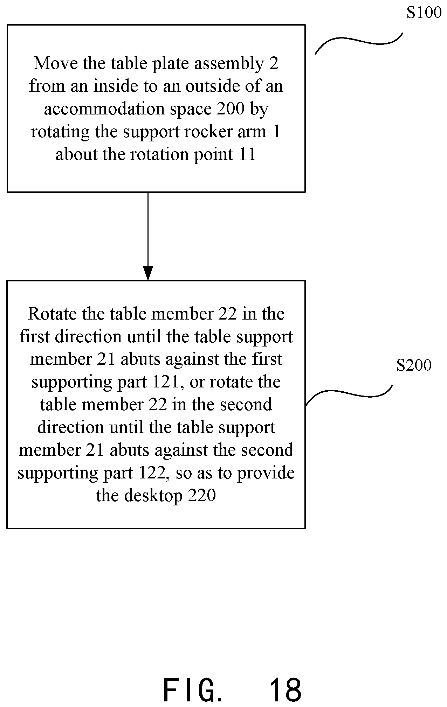

Referring to FIG. 15, in some embodiments, a structure for providing rotation blockers by the rotating part 120, the first supporting part 121 and the second supporting part 122 may be that a first edge 1201 of the rotating part 120 is substantially perpendicular to a second edge 1211 of the first supporting part 121, the second edge 1211 providing a first shoulder 124; a third edge 1202 of the rotating part 120 is substantially perpendicular to a fourth edge 1221 of the second supporting part 122, the fourth edge 1221 providing a second shoulder 125. For example, as shown in FIG. 18, the first shoulder 124 provides support for the table support member 21 on a left side, and the second shoulder 125 provides support for the table support member 21 on a right side. Such a structure is simple and stable in abutment effect. The term "substantially perpendicular" herein can be understood as not strictly 90°, and may have an appropriate error, for example, within an error of ±5°, which all fall within the scope of substantially perpendicular. In addition, the perpendicular connection part may be subjected to an appropriate arc chamfering structure to reduce stress concentration and improve the service life.

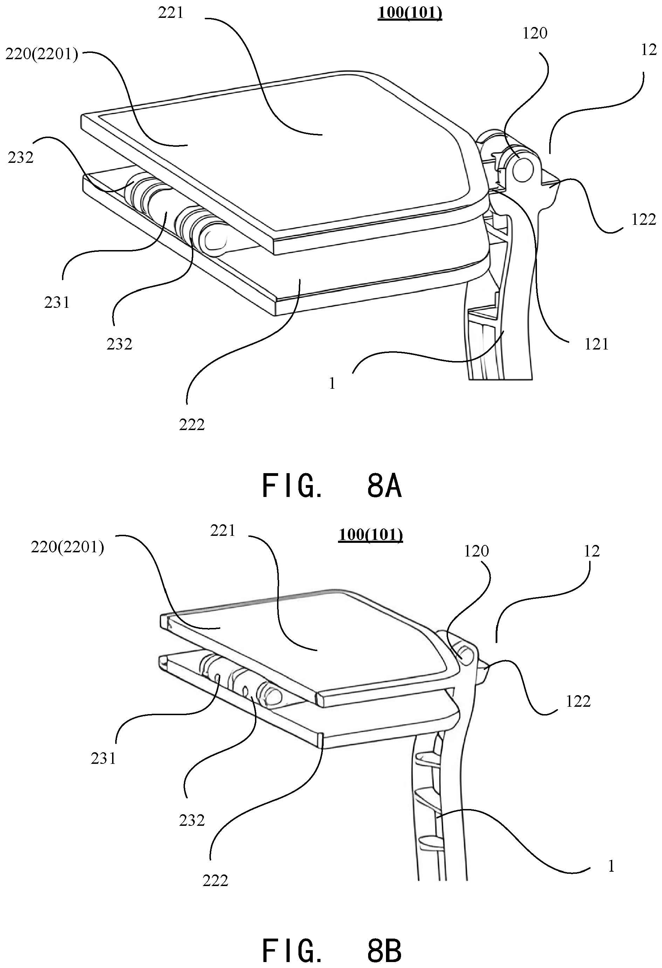

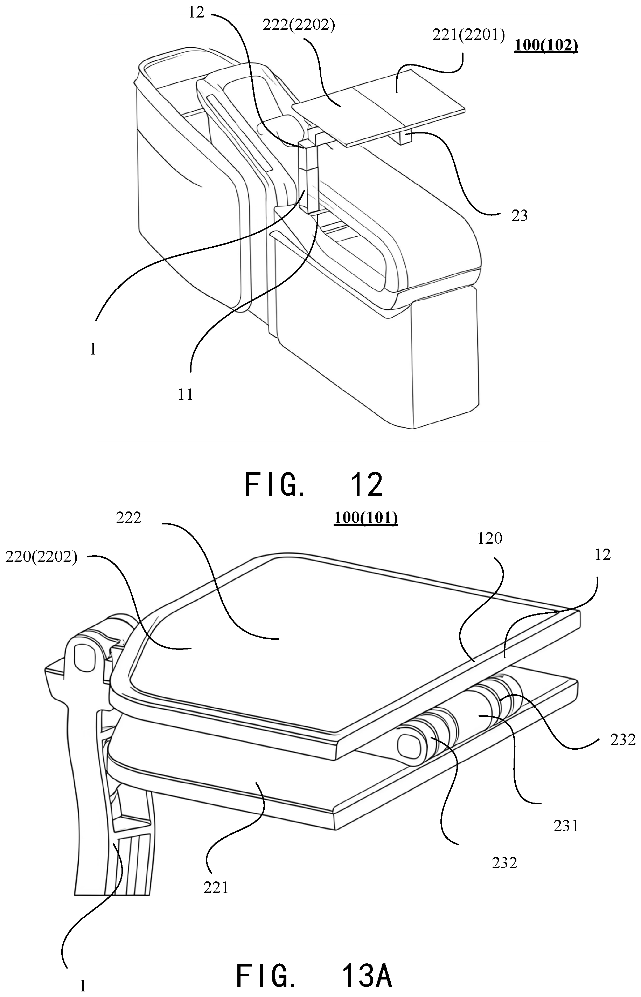

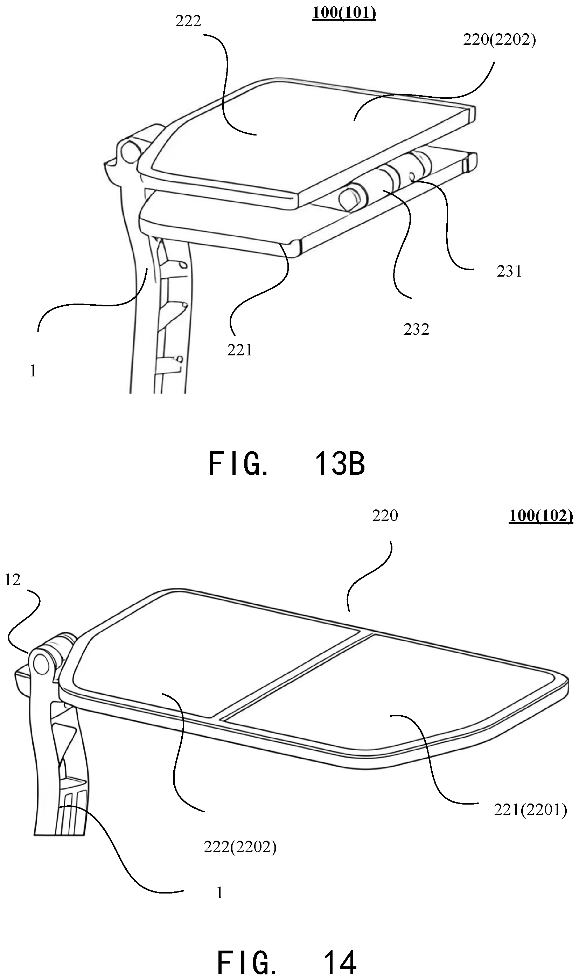

With continued reference to FIGS. 5 to 9 and FIGS. 10 to 14, in some embodiments, the table member 22 includes a first table plate 221 and a second table plate 222, the first table plate 221 and the second table plate 222 being connected by a hinge assembly 23; the hinge assembly 23 includes a first hinge 231 and a second hinge 232 arranged coaxially; the hinge assembly 23 is located at one end of the table support member 21 in a length direction and between the first table plate 221 and the second table plate 222; the first table plate 221 is rotatable about the first hinge 231, and the second table plate 222 is rotatable about the second hinge 232. By employing the structure of the first table plate 221 and the second table plate 222, the user's demand for different desktop sizes in different scenarios is able to be satisfied, and excessive occupation of the accommodation space 200 by the table assembly 100 is able to be avoided. For example, when placing a cup or a drink, only the first table plate or the second table plate needs to be unfolded; when a large object such as a tablet computer needs to be placed, the first table plate and the second table plate (or the second table plate and the first table plate in sequence) can be unfolded in sequence to provide a larger desktop area for placing the object. In some embodiments, as shown in FIGS. 8A and 13A, for the coaxially arranged first hinge 231 and second hinge 232, the second hinge 232 is located at two axial sides of the first hinge 231; the first hinge 231 and the second hinge 232 are connected with a damper, and the damper can buffer the rotating and unfolding process. The damper may employ a common structure of a rotary damper, and the detailed structure of the damper will not be described in detail here. Alternatively, as shown in FIGS. 8B and 13B, the second hinge 232 and the first hinge 231 are respectively arranged at one axial side and the other axial side, for example, at left and right sides respectively.

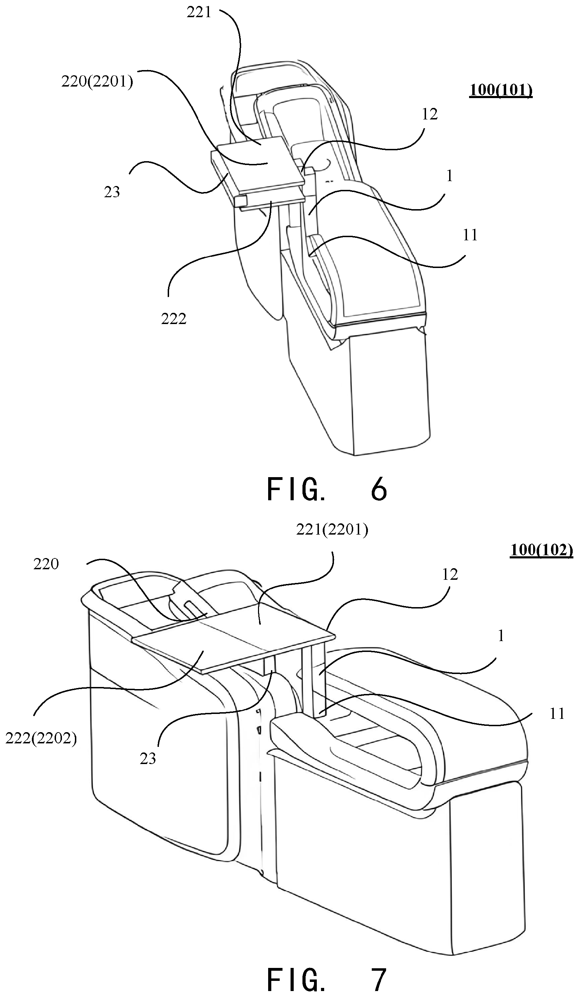

In some embodiments, the table assembly 100 has a first open state 101 and a second open state 102. As shown in FIGS. 6, 8A, 8B, 11, 13A and 13B, in the first open state 101, one of the first table plate 221 and the second table plate 222 of the table member 22 is located on an upper surface to provide a first desktop 2201, and the other is located below the first desktop 2201, wherein only the first desktop 2201 provides the desktop 220 of the table assembly 100. As shown in FIGS. 7, 9, 12 and 14, in the second open state 102, on the basis that one of the first table plate 221 and the second table plate 222 of the table member 22 is located on the upper surface to provide the first desktop 2201, the other is turned over to a position flush with the first desktop 2201 via the corresponding first hinge 231 and second hinge 232 to provide a second desktop 2202, such that the first desktop 2201 and the second desktop 2202 together provide the desktop 220.

Referring to FIG. 15, in some embodiments, a structure for stopping the rotational movement of the first hinge or the second hinge is that, the table support member 21 further includes at least one latch member 24, the latch member 24 including a plug-in portion 241 and an operating portion 242; the first hinge 231 and/or the second hinge 232 is provided with a plug-in opening 233, the plug-in opening 233 matching the plug-in portion 241. It can be understood that the number of plug-in openings 233 matches the number of latch members 24. Both the first hinge 231 and the second hinge 232 may be correspondingly provided with the latch member 24 and the plug-in opening 233, or only one of them may be provided, which can be adjusted according to the space and demand of the arrangement structure. When the operating portion 242 is subjected to an operating force, the plug-in portion 241 is movable to connect with or disconnect from the plug-in opening 233, to lock or unlock the first hinge 231 and the second hinge 232. For example, as shown in FIG. 15, the first table plate 221 is opened first, and the second table plate 222 is opened later to realize the second open state. At this time, the user can directly push the operating portion 242 to the left, so that the plug-in portion 241 is inserted into the plug-in opening 233 to stop the rotation of the second hinge, so that the structure of the second open state is stable. With continued reference to FIG. 15, in some embodiments, the plug-in portion 241 and the operating portion 242 are fixedly connected by a pin member 243, and such a structure is simple and compact, and is easy to arrange in a narrow space. It can be understood that in some embodiments, the hinge assembly may not be provided with a latch member. When no latch member is provided, the structure in which the second hinge 232 is located at two axial sides of the first hinge 231 as shown in FIGS. 8A and 13A may be employed, and the stress is more uniform. When the latch member is provided, the structure in which the second hinge 232 and the first hinge 231 are respectively arranged at one axial side and the other axial side as shown in FIGS. 8B and 13B may be adopted, for example, at left and right sides respectively, so that the occupied space is small and the number of corresponding latch members is small, which are not limited thereto.

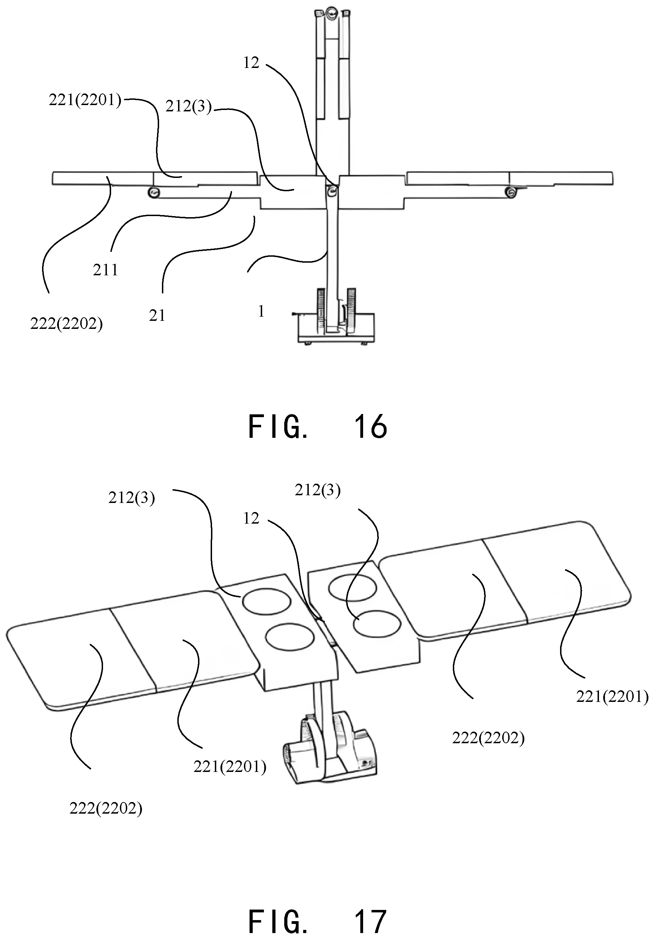

Referring to FIGS. 16 and 17, in the embodiments described above, the table support member 21 only provides a structure for supporting the table plate, but is not limited thereto. For example, in some embodiments as shown in FIGS. 16 and 17, the table support member 21 includes a first part 211 and a second part 212, the first part 211 supporting the table member 22, that is, the table support member 21 in some embodiments as shown in FIGS. 2 to 15. The second part 212 is connected to the support rotating part 12, and the second part 212 is provided with a cup holder 3. It can be understood that the setting of the second part 212 enables the table assembly 100 to provide functions such as the cup holder 3, and the table assembly 100 is further multifunctional. In addition, the setting of the second part 212 does not affect the functions of the table assembly 100 having the first open state and the second open state described in the above embodiments. The structures shown in FIGS. 16 and 17 are structures in the second open state rotated to the left or right, and it can be understood that the function of the cup holder 3 can be provided in the first open state.

As described above, with reference to FIGS. 5 to 7, 10 to 12 and FIG. 18, the present disclosure further provides a method for providing a desktop, adopting the table assembly 100 described in the above embodiments, the method including the following steps.

S100. Move the table plate assembly 2 from an inside to an outside of an accommodation space 200 by rotating the support rocker arm 1 about the rotation point 11.

S200. Rotate the table member 22 in the first direction until the table support member 21 abuts against the first supporting part 121, or rotate the table member 22 in the second direction until the table support member 21 abuts against the second supporting part 122, so as to provide the desktop 220.

It can be understood that providing the desktop 220 may further include the following steps:
S201. One of the first table plate 221 and the second table plate 222 of the table member 22 is located on an upper surface to provide a first desktop 2201, and the other is located below the first desktop 2201, wherein only the first desktop 2201 provides the desktop 220 of the table assembly 100;
S202. On the basis that one of the first table plate 221 and the second table plate 222 of the table member 22 is located on the upper surface to provide the first desktop 2201, the other is turned over to a position flush with the first desktop 2201 via the corresponding first hinge 231 and second hinge 232 to provide a second desktop 2202, such that the first desktop 2201 and the second desktop 2202 together provide the desktop 220.

In summary, the beneficial effects of the table assembly, the vehicle and the method for providing a desktop of the above embodiments include, but are not limited to: by providing the rotatably unfoldable support rocker arm and the support rotating part at one end, and providing the rotating part and the supporting parts at two sides, rotation blockers in opposite first and second directions are provided, so that a single table member can be used by users in multiple directions. When a user on one side needs the desktop, the table member is rotated in the first direction; when a user on the other side needs the desktop, the table member is rotated in the second direction. Thus, there is no need to provide corresponding table assemblies in two directions respectively (which requires two table assemblies), and this can be realized by only a single table assembly, thereby minimizing the occupied space on the basis of satisfying the use of the desktop by multiple users.

Although the present disclosure is disclosed as above with embodiments, it is not intended to limit the present disclosure. Any person skilled in the art can make possible changes and modifications without departing from the spirit and scope of the present disclosure. Therefore, any modification, equivalent change, and modification made to the above embodiments according to the technical essence of the present disclosure without departing from the content of the technical solution of the present disclosure shall fall within the scope defined by the claims of the present disclosure.

## Claims

1. A table assembly (100), **characterized in that** it comprises:
a support rocker arm (1), one end of the support rocker arm (1) in a length direction providing a rotation point (11) of the support rocker arm (1), the support rocker arm (1) being rotatable about the rotation point (11); the other end of the support rocker arm (1) in the length direction providing a support rotating part (12), the support rotating part (12) comprising a rotating part (120), a first supporting part (121) and a second supporting part (122), the first supporting part (121) and the second supporting part (122) being respectively located at two sides of the rotating part (120); and
a table plate assembly (2) comprising:
a table support member (21) rotatably connected to the rotating part (120), the table support member (21) being rotatable in a first direction until the table support member (21) abuts against the first supporting part (121), or the table support member (21) being rotatable in a second direction until the table support member (21) abuts against the second supporting part (122), the first direction being opposite to the second direction; and
a table member (22) providing a desktop (220), the table support member (21) being located at a side opposite to the desktop (220) to support the table member (22).

2. The table assembly (100) according to claim 1, **characterized in that** a first edge (1201) of the rotating part (120) is substantially perpendicular to a second edge (1211) of the first supporting part (121), the second edge (1211) providing a first shoulder (124); and a third edge (1202) of the rotating part (120) is substantially perpendicular to a fourth edge (1221) of the second supporting part (122), the fourth edge (1221) providing a second shoulder (125).

3. The table assembly (100) according to claim 1, **characterized in that** the table member (22) comprises a first table plate (221) and a second table plate (222), the first table plate (221) and the second table plate (222) being connected by a hinge assembly (23); the hinge assembly (23) comprises a first hinge (231) and a second hinge (232) arranged coaxially; the hinge assembly (23) is located at one end of the table support member (21) in a length direction and between the first table plate (221) and the second table plate (222); the first table plate (221) is rotatable about the first hinge (231), and the second table plate (222) is rotatable about the second hinge (232).

4. The table assembly (100) according to claim 3, **characterized in that** the table support member (21) further comprises at least one latch member (24), the latch member (24) comprising a plug-in portion (241) and an operating portion (242); the first hinge (231) and/or the second hinge (232) is provided with a plug-in opening (233), the plug-in opening (233) matching the plug-in portion (241); when the operating portion (242) is subjected to an operating force, the plug-in portion (241) is movable to connect with or disconnect from the plug-in opening (233), so as to lock or unlock the first hinge (231) and the second hinge (232).

5. The table assembly (100) according to claim 4, **characterized in that** the plug-in portion (241) and the operating portion (242) are fixedly connected by a pin member (243).

6. The table assembly (100) according to claim 3, **characterized in that** the table assembly (100) has a first open state (101) and a second open state (102):
in the first open state (101), one of the first table plate (221) and the second table plate (222) of the table member (22) is located on an upper surface to provide a first desktop (2201), and the other is located below the first desktop (2201), wherein only the first desktop (2201) provides the desktop (220) of the table assembly (100);
in the second open state (102), on the basis that one of the first table plate (221) and the second table plate (222) of the table member (22) is located on the upper surface to provide the first desktop (2201), the other is turned over to a position flush with the first desktop (2201) via the corresponding first hinge (231) and second hinge (232) to provide a second desktop (2202), such that the first desktop (2201) and the second desktop (2202) together provide the desktop (220).

7. The table assembly (100) according to claim 3, **characterized in that**, for the coaxially arranged first hinge (231) and second hinge (232), the second hinge (232) is located at two axial sides of the first hinge (231), or the second hinge (232) and the first hinge (231) are respectively arranged at one axial side and the other axial side; the first hinge (231) and/or the second hinge (232) is connected with a damper.

8. The table assembly (100) according to claim 1, **characterized in that** the table support member (21) comprises a first part (211) and a second part (212), the first part (211) supporting the table member (22), the second part (212) being connected to the support rotating part (12), and the second part (212) being provided with a cup holder (3).

9. A vehicle (1000), **characterized in that** it comprises the table assembly (100) according to any one of claims 1 to 8; the vehicle (1000) comprises a center console armrest (1001) and/or a seat armrest, and a single center console armrest (1001) or seat armrest only accommodates a single table assembly (100).

10. A method for providing a desktop, **characterized in that** the table assembly (100) as claimed in any one of claims 1 to 8 is employed, the method comprising following steps:
moving the table plate assembly (2) from an inside to an outside of an accommodation space (200) by rotating the support rocker arm (1) about the rotation point (11);
rotating the table member (22) in the first direction until the table support member (21) abuts against the first supporting part (121), or rotating the table member (22) in the second direction until the table support member (21) abuts against the second supporting part (122), so as to provide the desktop (220).
